# EUROPEAN PATENT APPLICATION

(11) **EP 4 517 308 A1**
(43) Date of publication of application: **05.03.2025**
(21) Application number: 24195656.4
(22) Date of filing: 21.08.2024
(51) Int. Cl.: G01N 21/88, G01B 11/25, G01B 11/30, G01N 21/95, F01D 21/00, G01N 21/954

(54) **OPTICAL DEFECT DETECTION SYSTEM**

(30) Priority: 25.08.2023 US 202318238051
(71) Applicant: RTX Corporation, Farmington, CT 06032 (US)
(72) Inventor: Lee, Jeremiah C., Coventry, CT, 06238 (US); Donat, William K., Manchester, CT, 06040 (US); Goyette, Scott, Moosup, CT, 06354 (US); Seto, Danbing, Avon, CT, 06001 (US)
(74) Representative: Schmitt-Nilson Schraud Waibel Wohlfrom Patentanwälte Partnerschaft mbB

(57) **Abstract**

An in-situ system (10) for a gas turbine engine blade inspection including a sensor system (12) configured to capture images of a forward surface (32) of at least one gas turbine engine blade (34); a processor (16) coupled to the sensor system, the processor configured to determine damage to the at least one gas turbine engine blade based on image analytics; and a tangible, non-transitory memory configured to communicate with the processor, the tangible, non-transitory memory having instructions stored therein that, in response to execution by the processor, cause the processor to perform operations comprising receiving, by the processor, data for the forward surface of at least one gas turbine engine blade from the sensor system; and determining, by the processor, surface damage responsive to the light source.

## Description

The present disclosure is directed to an optical inspection system. Particularly, the disclosure is directed to an optical inspection system for fan blades utilizing light projection and light polarization.

Gas turbine engine components, such as blades or vanes, may suffer irregularities from manufacturing or wear and damage during operation, for example, due to erosion, hot corrosion (sulfidation), cracks, dents, nicks, gouges, and other damage, such as from foreign object damage. Detecting this damage may be achieved by images, videos, or depth data for aircraft engine blade inspection, power turbine blade inspection, internal inspection of mechanical devices, and the like. A variety of techniques for inspecting by use of images, videos, or 3D sensing may include capturing and displaying images, videos, or damage/defect data to human inspectors for manual defect detection and interpretation. Human inspectors may then decide whether any defect exists within those images, videos, or damage/defect data.In addition to a human inspector making decisions, the ability to detect, determine, and annunciate that damage has actually occurred and for the maintainer to perform a condition-based inspection to confirm the technologies findings.

In-situ optical monitoring of fan blade damage in a turbofan engine while the engine is in operation requires the use of high speed (high shutter speed) cameras to reduce motion induced blurring in the footage. The optical requirements incur significant limitations. For example, a wide depth of field, and thus a high value of f-stop, is required to get the fan blade surface, which is curved, in focus. The combination of high shutter speed and high f-stop means the amount of light reaching the optical sensor of the camera is greatly reduced resulting often in under exposure of light. This in turn either puts a limit on the resolution of the photographic system or requires powerful lighting systems (which is difficult due to available space/power for installation). Consequently, detection of small damage becomes difficult. Due to the limited space inside an engine, the camera is located in an suboptimal location and the distance of different portions of the blade to the camera varies widely, further imposing restrictions on the high value of f-stop to keep the entire blade in focus.

Additionally, an optical in-situ fan blade damage detection system utilizing a high speed digital camera is hindered by the large variations in the metal surface features and reflectance. For example, an aged blade may be grey and matte and damaged sites could appear reflective. A pristine surface has a high reflectance and is rich in specular reflection and damage in such a background would appear as dark spots in comparison. Note that the exposure cannot be changed on the fly in a high-speed camera so these effects cannot be reduced by changing the exposure dynamically with each exposure. The illumination source intensity or other optical qualities, such as degree of polarization and incident angles would also significantly change the exposure, contrast, and appearance of the defects relative to the background in the footage. Great variations in contrast and exposure also appear mainly due to the curvature of the fan blade surface and the fixed angle of the light source. Detection of such widely varying features in images requires a large deep neural network (typically with convolution layers) which in turn requires a large and extensive labelled training set and significant computational power. These make the application of such systems difficult onboard an engine especially when real time processing is required.

What is needed is a set of optical techniques in conjunction with improved image analytics with the aim of improving the system performance while reducing the computational requirements.

In accordance with the present disclosure, there is provided an in-situ system for a gas turbine engine blade inspection comprising a sensor system configured to capture images of a forward surface of at least one gas turbine engine blade; a processor coupled to the sensor system, the processor configured to determine damage to the at least one gas turbine engine blade based on image analytics; an illumination source in operative communication with the forward surface of at least one gas turbine engine blade; and a tangible, non-transitory memory configured to communicate with the processor, the tangible, non-transitory memory having instructions stored therein that, in response to execution by the processor, cause the processor to perform operations comprising: receiving, by the processor, data for the forward surface of at least one gas turbine engine blade from the sensor system; and determining, by the processor, surface damage responsive to the light source.

A further embodiment of any of the foregoing embodiments may additionally and/or alternatively include the illumination source is selected from the group consisting of a polarized light, an infrared light and a laser mesh pattern of light.

A further embodiment of any of the foregoing embodiments may additionally and/or alternatively include the in-situ system for gas turbine engine blade inspection further comprising a polarization filter in operative communication with the sensor system.

A further embodiment of any of the foregoing embodiments may additionally and/or alternatively include the sensor system comprises at least one of a CMOS sensor and a polarization camera.

A further embodiment of any of the foregoing embodiments may additionally and/or alternatively include an IR cut-off filter is disabled from the CMOS sensor.

A further embodiment of any of the foregoing embodiments may additionally and/or alternatively include the illumination source is configured to emit linearly polarized light, the linearly polarized light being turned into an elliptically polarized light responsive to reflection off of the surface damage.

A further embodiment of any of the foregoing embodiments may additionally and/or alternatively includethe in-situ system for gas turbine engine blade inspection further comprising at least one of a combination of optical lens and light interference devices operatively coupled to the illumination source, and laser lines produced by an array of cylindrical lenses or a combination of one or more Powell lenses operatively coupled to the illumination source.

A further embodiment of any of the foregoing embodiments may additionally and/or alternatively include the illumination source is configured to produce a mesh or a series of lines projected onto the forward surface of the at least one gas turbine engine blade.

A further embodiment of any of the foregoing embodiments may additionally and/or alternatively include the illumination source creates a kink or discontinuity on a smooth curve of the mesh or lines responsive to illumination of the surface damage.

A further embodiment of any of the foregoing embodiments may additionally and/or alternatively include the gas turbine engine blade is selected from the group consisting of a fan blade a vane, a compressor blade, a compressor vane, a turbine blade, and a turbine vane.

In accordance with the present disclosure, there is provided a method for in-situ inspection of a gas turbine engine fan, comprising positioning a sensor to capture images of a forward surface of at least one gas turbine engine fan blade; positioning an illumination source in operative communication with the forward surface of at least one gas turbine engine blade; coupling a processor to the sensor, the processor configured to determine damage to the at least one gas turbine engine fan blade based on image analytics; wherein the processor performs operations comprising: receiving, by the processor, imaging data for the forward surface of at least one gas turbine engine fan blade from the sensor system; determining, by the processor, surface damage responsive to the light source.

A further embodiment of any of the foregoing embodiments may additionally and/or alternatively include the illumination source is selected from the group consisting of a polarized light, an infrared light and a laser mesh pattern of light.

A further embodiment of any of the foregoing embodiments may additionally and/or alternatively include the method for in-situ inspection of a gas turbine engine fan further comprising operatively coupling a polarization filter with the sensor system.

A further embodiment of any of the foregoing embodiments may additionally and/or alternatively include the method for in-situ inspection of a gas turbine engine fan further comprising disabling an IR cut-off filter from a CMOS sensor.

A further embodiment of any of the foregoing embodiments may additionally and/or alternatively include the method for in-situ inspection of a gas turbine engine fan further comprising configuring the light source to emit linearly polarized light; and turning the linearly polarized light into an elliptically polarized light responsive to reflection off of the surface damage.

A further embodiment of any of the foregoing embodiments may additionally and/or alternatively include the method for in-situ inspection of a gas turbine engine fan further comprising operatively coupling the illumination source to at least one of a combination of optical lens and light interference devices, and laser lines produced by an array of cylindrical lenses or a combination of one or more Powell lenses.

A further embodiment of any of the foregoing embodiments may additionally and/or alternatively include the method for in-situ inspection of a gas turbine engine fan further comprising configuring the illumination source to produce a mesh or a series of lines projected onto the forward surface of the at least one gas turbine engine blade.

A further embodiment of any of the foregoing embodiments may additionally and/or alternatively include the method for in-situ inspection of a gas turbine engine fan further comprising creating a kink or discontinuity on a smooth curve of the mesh or lines with the illumination source responsive to illumination of the surface damage.

A further embodiment of any of the foregoing embodiments may additionally and/or alternatively include capturing images are created during gas turbine engine operational conditions selected from the group consisting of coasting, spool-up, and spool-down, including at least one complete revolution.

A further embodiment of any of the foregoing embodiments may additionally and/or alternatively include the sensor comprises at least one of, multiple sensors, a video camera, a high-speed camera, a CMOS sensor and a polarization camera.

Other details of the optical in-situ inspection system are set forth in the following detailed description and the accompanying drawings wherein like reference numerals depict like elements.

### BRIEF DESCRIPTION OF THE DRAWINGS

FIG. 1 is a schematic diagram of an exemplary fan blade inspection system in accordance with various embodiments.
FIG. 2 is a schematic diagram of an exemplary fan blade inspection system.
FIG. 3 illustrates an exemplary fan with a fan blade plane (centerline in side view).
FIG. 4 is a schematic diagram of the exemplary fan blade inspection system in-situ.
FIG. 5 is a schematic diagram of an exemplary fan blade with polarized light.
FIG. 6 is a schematic diagram of an exemplary fan blade with polarized light detection.
FIG. 7 is a schematic diagram of an exemplary fan blade with infrared light detection.
FIG. 8 is a top view schematic diagram of an exemplary fan blade with mesh light pattern projection for use in damage detection.
FIG. 9 is a process map of an exemplary fan blade inspection system in accordance with various embodiments.

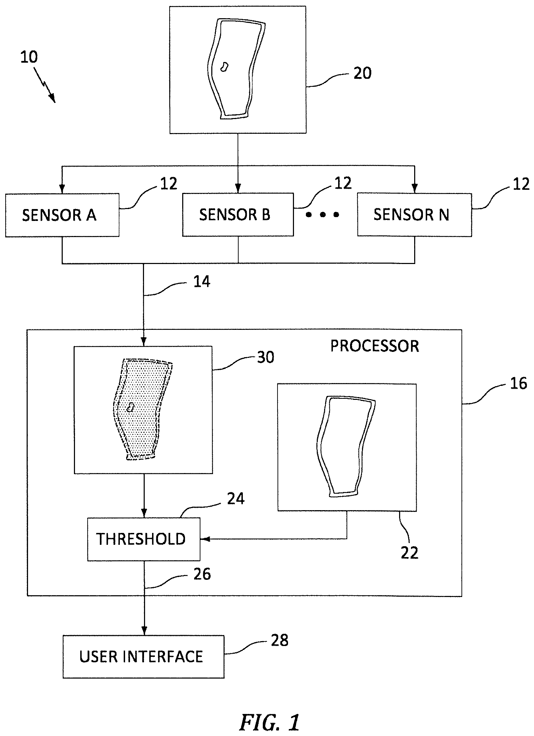

Referring to FIG. 1, a schematic illustration of a damage detection system 10 for detecting a defect or damage to a component 20 is shown, in accordance with various embodiments. Damage detection system 10 may be configured to perform 3D imaging of a component 20. Component 20 may include a component on an aircraft, such as an engine component, such as a fan or even a fan blade or an airfoil (e.g., a blade). Component 20 may be scanned or sensed by one or more sensors 12 to obtain data 14 about the component 20. Data 14 may be obtained, for example, from a high-speed camera, standard speed camera, a single 2D sensor, a single 3D sensor, photo diodes, light polarization detection sensors, or multiple sensors of multiple types. In various embodiments, data 14 may be obtained by rotating, panning, or positioning the sensor(s) 12 relative to the component 20 to capture data 14 from multiple viewpoint angles, perspectives, and/or depths. Further, the component 20 may be rotated or positioned relative to the sensor(s) 12 to obtain data 14 from multiple viewpoints, perspectives, and/or depths. An array of sensors 12 positioned around component 20 may be used to obtain data 14 from multiple viewpoints. Thus, either of the sensor(s) 12 or component 20 may be moved or positioned relative to the other and relative to various directions or axes of a coordinate system to obtain sensor information from various viewpoints, perspectives, and/or depths. Further, sensor 12 may scan, sense, or capture information from a single position relative to component 20.

The sensor(s) 12 may include a one-dimensional (1D), 2D, 3D sensor (depth sensor) and/or a combination and/or array thereof. Sensor 12 may be operable in the electromagnetic or acoustic spectrum capable of producing a 3D point cloud, occupancy grid or depth map of the corresponding dimension(s). Sensor 12 may provide various characteristics of the sensed electromagnetic or acoustic spectrum including intensity, spectral characteristics, polarization, etc. In various embodiments, sensor 12 may include a distance, range, and/or depth sensing device. Various depth sensing sensor technologies and devices include, but are not limited to, a structured light measurement, polarization measurement, phase shift measurement, time of flight measurement, stereo triangulation device, sheet of light triangulation device, light field cameras, coded aperture cameras, computational imaging techniques, simultaneous localization and mapping (SLAM), imaging radar, imaging sonar, echolocation, laser radar, scanning light detection and ranging (LIDAR), flash LIDAR, or a combination comprising at least one of the foregoing. Different technologies can include active (transmitting and receiving a signal) or passive (only receiving a signal) and may operate in a band of the electromagnetic or acoustic spectrum such as visual, infrared, ultrasonic, etc. In various embodiments, sensor 12 may be operable to produce depth from defocus, a focal stack of images, or structure from motion.

In various embodiments, sensor 12 may include an image capture device, such as an optical device having an optical lens, such as a camera, mobile video camera or other imaging device or image sensor, capable of capturing 2D still images or video images. Sensor 12 may include two or more physically separated cameras that may view a component from different angles, to obtain visual stereo image data.

In various embodiments, sensor 12 may include a structured light sensor, a line sensor, a linear image sensor, other 1D sensor, or an array of single photo diodes. Further, sensor 12 may include a 2D sensor, and damage detection system 10 may extract 1D or 2D information from the 2D sensor data. 2D data 14 may be synthesized by processor 16 from multiple 1D data 14 from a 1D sensor 12 or from multiple 1D or 2D data 14 extracted from a 2D sensor 12. The extraction of 1D or 2D data 14 from 2D data 14 may include retaining only data that is in focus. Even further, sensor 12 may include a position and/or orientation sensor such as an inertial measurement unit (IMU) that may provide position and/or orientation information about component 20 with respect to a coordinate system or other sensor 12. The position and/or orientation information may be beneficially employed in synthesizing 2D data from 1D data, or in aligning 1D, 2D or 3D information to a reference model as discussed elsewhere herein.

Data 14 from sensor(s) 12 may be transmitted to one or more processors 16 (e.g., computer systems having a central processing unit and memory) for recording, processing and storing the data received from sensors 12. Processor 16 may include a general-purpose processor, a digital signal processor (DSP), an application specific integrated circuit (ASIC), a field programmable gate array (FPGA) or other programmable logic device, discrete gate or transistor logic, discrete hardware components, or any combination thereof. Processor 16 may be in communication (such as electrical communication) with sensors 12 and may be configured to receive input, such as images and/or depth information from sensors 12. Processor 16 may receive data 14 about component 20 captured and transmitted by the sensor(s) 12 via a communication channel. Upon receiving the data 14, the processor 16 may process data 14 from sensors 12 to determine if damage or defects are present on the component 20.

In various embodiments, processor 16 may receive or construct 2D or 3D information 30 corresponding to the component 20. The construction of 3D information from 1D or 2D information may include tiling, mosaicking, stereopsis, structure from motion, structure from multiple viewpoints, simultaneous localization and mapping, and the like.

In various embodiments, processor 16 of damage detection system 10 may classify the damage and determine the probability of damage and/or if the damage meets or exceeds a threshold 24. Threshold 24 may be an input parameter, may be based on reference model 22, may be from user input, and the like. Processor 16 may provide an output 26 to a user interface 28 indicating the status of the component 20. User interface 28 may include a display. Damage detection system 10 may display an indication of the damage to component 20, which may include an image and/or a report. In addition to reporting any defects in the component, output 26 may also relay information about the type of defect, the location of the defect, size of the defect, etc. If defects are found in the inspected component 20, an indicator may be displayed on user interface 28 to alert personnel or users of the defect.

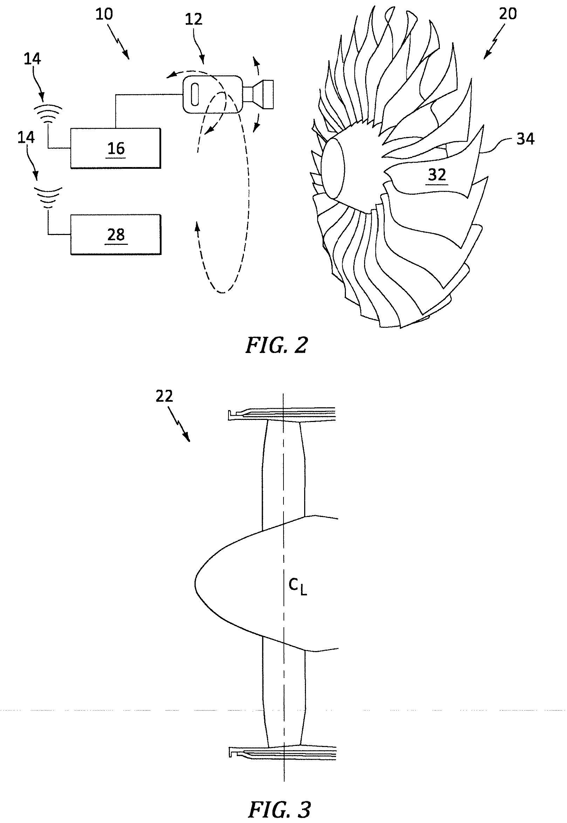

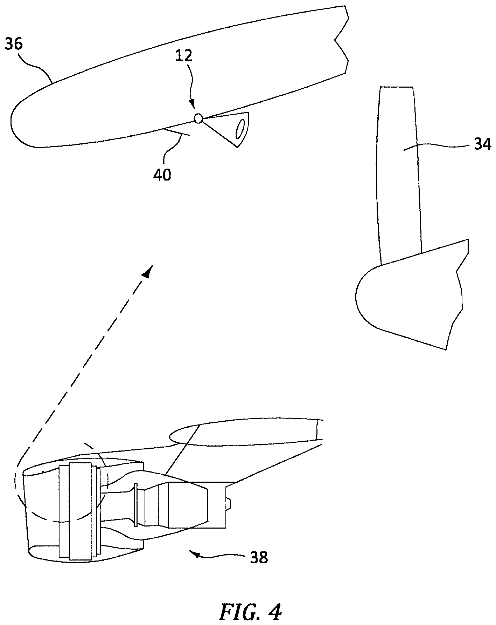

Referring also to Fig. 2, the exemplary damage detection system 10 can be seen. Fig. 2 depicts an external, unattached inspection system. In this disclosure, the unattached inspection system depicted in Fig. 2 is considered to be in-situ. In another exemplary embodiment, the system 10 can include an optical in-situ, i.e., built-in, system for a gas turbine engine blade inspection. The component 20 can be a blade of a fan, a vane, a blade of a compressor, a vane of a compressor, a blade of a turbine, or a vane of a turbine. The exemplary embodiment shown in Fig. 2 includes a fan as the component 20. The sensor 12, is shown as a mobile video camera system 12 configured to capture video images of an entire forward surface 32 of at least one gas turbine engine blade 34. The camera 12 can be mobile (shown as arrows), such that the camera can move, pan, slide or otherwise reposition to capture the necessary image data 14 of the entire forward surface 32. The mobile video camera system 12 can be moved through location and pose variation to image the entire forward surface 32 of each of the blades 34 of the gas turbine engine 38, as shown in Fig. 4. The imaging of the blade 34 of the gas turbine engine 38 can be done either continuously or intermittently. In another exemplary embodiment, the imaging is conducted during gas turbine engine 38 operational conditions such as coasting, spool-up, and spool-down, including at least one complete revolution.

The processor 16 may be coupled to the mobile video camera (system) 12. The processor 16 can be configured to determine damage to the gas turbine engine blade 34 based on image analytics. The processor 16 is shown with a transceiver configured to communicate wirelessly with the user interface 28. In another exemplary embodiment the system can be hard wired. The processor 16 can be configured to automatically report damage and archive the damage for trending and condition-based-maintenance.

The processor 16 can be configured to receive the data for the entire forward surface of the gas turbine engine 38 from the video camera system 12. The processor 16 can synthesize the entire forward surface view using a simultaneous localization and mapping (SLAM) process, structure from motion process, and the like program as described elsewhere herein. The processor 16 can include a model registration process based on blade plane determination as shown in Fig. 3. The blade plane may be determined by mathematically fitting a flat 2-dimensional plane to all, or a subset, of the data 14. In one embodiment, a subset of data comprising the most radially extreme data points (indicative of the blade tips) is used in the plane fitting. The plane may be fitted by standard linear regression. The blade plane may be used for damage detection (e.g., for position of the blades with respect to the plane), for an initial orientation for registration of a single blade model, and the like.

Referring also to Fig. 4, the sensor 12 is configured as a mobile camera integral with and coupled to a nacelle 36 of a gas turbine engine 38. In another exemplary embodiment, the camera 12 can be coupled to an engine washing system (not shown). In this disclosure, the camera 12 coupled to an engine washing system is considered to be in-situ. In an exemplary embodiment, the mobile video camera system 12 can include lighting within a visible spectrum and/or an infrared spectrum. In another exemplary embodiment, the mobile video camera system 12 can include a shroud 40 configured to protect the mobile video camera system 12 from impact damage and debris entering the gas turbine engine 38. In another exemplary embodiment, the mobile video camera system 12 can retract into a protected position away from exposure to debris. In yet another embodiment, video camera system 12 may be mounted substantially flush with an inner surface of a gas turbine engine 38, or the like, or be mounted behind a protective window which is substantially flush with the inner surface. In these embodiments, video camera 12 may require special design for high-temperature operation such as special cooling, additional relay optics, high-temperature fiber-optic light guides, and the like.

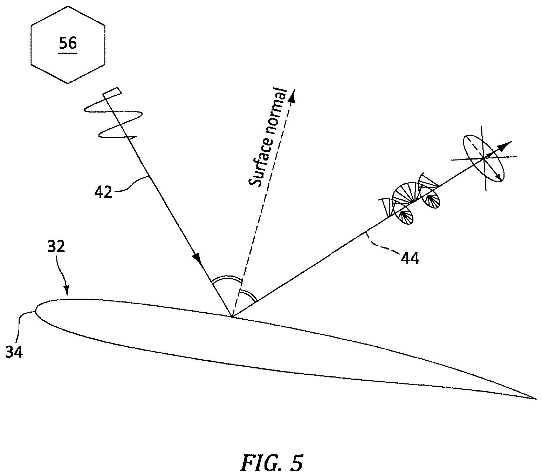

Referring also to Fig. 5, an exemplary blade 34 is shown with a beam of polarized light 42 shining on the surface 32. Linearly polarized light 42 changes upon reflection on a smooth titanium surface, or any conducting material's surface for that matter, in such a way that linearly polarized light 42 is turned into an elliptically polarized light 44. This is due to the phase shift variance between the parallel and the orthogonal components relative to the reflection surface.

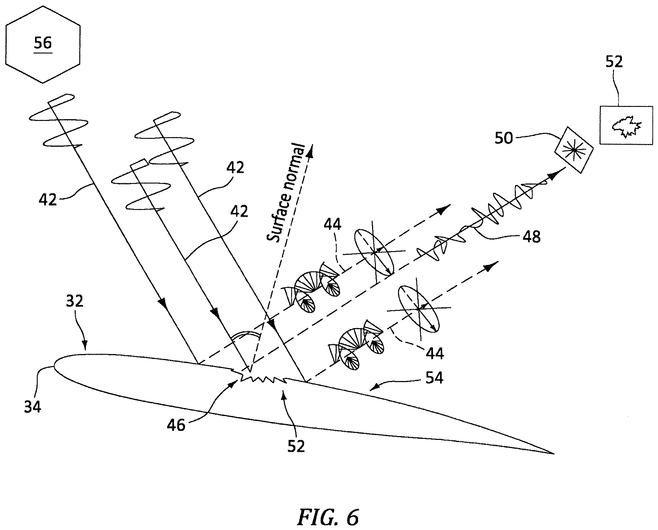

Referring also to Fig. 6, an exemplary blade 34 is shown with a beam of polarized light 42 shining on the surface 32 including surface damage 46. However, when a polarized light 42 falls on a damaged area 46 on the fan blade 34, this orderly transformation of the light polarization is disrupted and the reflection from the spot becomes unpolarized or partially polarized 48. In physics, when the rotation/modification of light's polarization is orientation dependent, an incident light that is originally linearly polarized will become elliptically polarized as shown in Fig. 5. This phenomenon corresponds to a rotation on the Jones vectors (which represents the direction of polarization) residing on the Poincaré sphere by complex rotational matrices.

An additional polarization filter(s) 50 can be used to block the light polarized by the undamaged surface 32, so that the surface damage 46 will stand out as bright spots 52, as depicted in Fig. 6.

This novel process effectively turns the damaged area 46 into a high contrast object 52 relative to its non-damaged surroundings 54 - effectively a bright spot which is an easy feature to identify in an image. One can also use the output of a polarization camera directly and check for small areas with abrupt polarization changes. Since the signal data 14 in this case relies on the polarization of the light, the data 14 is not sensitive to focusing the image. Also, the light intensity of the reflected light 48 does not create an issue since photographic details are not required. Thus, two of the main difficulties associated with a normal camera-based system are alleviated by a polarization-based method. Further, a polarized light source 56 is not limited to LED panels, a laser beam modified into a sheet using a commonly available optical lens can also be utilized. This light source 56 would further reduce the power requirement of the illumination source. The illumination or light source 56 can be in different frequencies, and can include a polarized light source, laser generated mesh projected onto the blade, laser sheets, light of different frequencies, and not necessarily in the visible spectrum.

Sensors 12, such as, digital cameras that record the polarization of light are commercially available and can be utilized to detect very small defects by measuring the changes in the polarization of the incident light when reflected off damage sites. The use of this technique to detect damage on a fan blade 34 is less restrictive to the accuracy in focusing, and lowering requirement on lighting power, as this technique will effectively increase the contrast of the damaged spot 46 relative to the undamaged background 54.

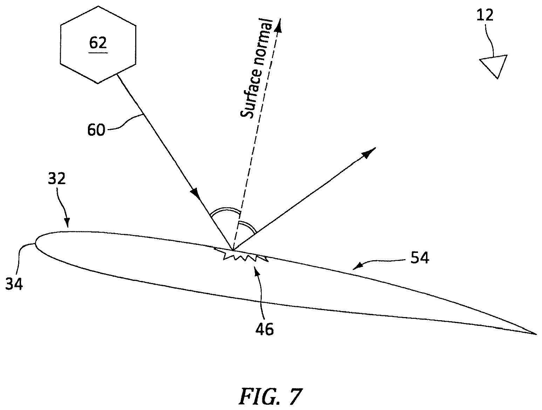

Referring also to Fig. 7, an exemplary blade 34 is shown with a beam of infrared (IR) light 60 shining on the surface 32.

The limited availability of space inside the housing of a gas turbine engine 38 can limit the illumination intensity possible (as the high-power lighting panels can be bulky). In some aircraft designs, the fan 20 is open to ambient light and thus, in the daytime, ambient light is available which alleviates the lighting problems to some extent. There are, however, designs that the ambient light is obstructed and kept from reaching the fan blades. With the maximum amount of illumination equipment that likely can be fitted, a 2 microsecond shutter speed at the f-stop of 16 is the practical limit for camera sensors, such as a Complementary Metal-Oxide Semiconductor (CMOS), that are tuned to be sensitive only to the visible spectrum of light. The CMOS image sensor is a type of image sensor technology inside some digital cameras. CMOS sensor consists of millions of pixel sensors, each of which includes a photodetector. As light enters the camera through the lens, the light strikes the CMOS image sensor, which causes each photodetector to accumulate an electrical charge based on the amount of light that strikes the image sensor. The digital camera then converts the charge to a digital reading, which determines the strength of the light measured at each photodetector, as well as the color. The software used to display photos converts those readings into the individual pixels that make up the photo when displayed together.

If one cannot open up the aperture due to the requirement of depth of field to capture sharp images of a fan blade 34 that is not flat, and if the shutter speed cannot be slowed down due to motion blurring, and further, if illumination cannot be further increased due to availably of space and power; the only remaining option is to increase the sensitivity of the image sensor 12.

Sensors, such as CMOS sensors 12 are sensitive to the infrared light and especially, the near IR spectrum which is why the CMOS sensors 12 can be equipped with IR cut-off filters to limit the sensor's spectral sensitivity to only the visible light to produce a more natural rendition. Note that for titanium fan blades 34, the titanium oxide surface layer is highly reflective of light in the far and near infrared spectrum.

A fresh surface area of damage 46 on a fan blade 34 can expose bare titanium metal which scatters light and is less reflective to the infrared light 60 resulting in increased contrast with its undamaged surroundings 54 when imaging is done including the infrared spectrum. A natural color rendition is unimportant for fan blade 34 inspection. A key to fan blade 34 inspection is to increase the contrast between the undamaged fan blade surface 54 and the damaged area 46, and also the overall sensitivity of the light sensor 12. By taking advantage of the intrinsic IR sensitivity of CMOS sensors 12, the damage detection system 10 is enhanced.

The CMOS sensor 12, is sensitive to a wide spectrum beyond the visible frequency range. The CMOS sensor 12 picks up light in the near infrared light spectrum particularly well. To produce a more natural rendition, camera sensors, such as the CMOS/ charge-coupled device (CCD) sensors 12 are manufactured with a built-in near IR cut-off filter in addition to the 3 color filters (RGB) for rendering color photographs.

It is proposed that the IR cut-off filter be removed/disabled from the CMOS sensor 12. When the IR cut-off filter is removed, more light energy will be available to be detected by the sensor 12. After removal of the IR-cutoff filter, when taking photographs in normal daylight conditions, the increased light sensitivity after the removal of the IR cut-off filter can require exposure adjustment (reduction of exposure) by a few stops.

In high-speed photography for the fan blade 34 detection, even a one stop (a factor of 2) increase in available light to the camera sensor 12 is critical. The accuracy of color reproduction is unimportant; light sensitivity and contrast, however, are crucial. The addition of IR sensitivity to the camera sensor can increase the light sensitivity by a few s-stops. In an exemplary fan housing, a background of far and near infrared spectrum exists due to the high temperature environment within the engine 38 which provides further incentive to use infrared sensitive camera sensors 12. An infrared illumination source 62 can be utilized to take advantage of the relative intrinsic sensitivity of CMOS in the near infrared spectrum. Infrared LED devices are available. As infrared light can penetrate obstacles better than visible light, the heat source within an engine and the infrared light in the ambient (sun light, for example, is very rich in the infrared spectrum) also provides some additional infrared light intensity, thus, an infrared sensitive camera sensor 12 can make use of more available light.

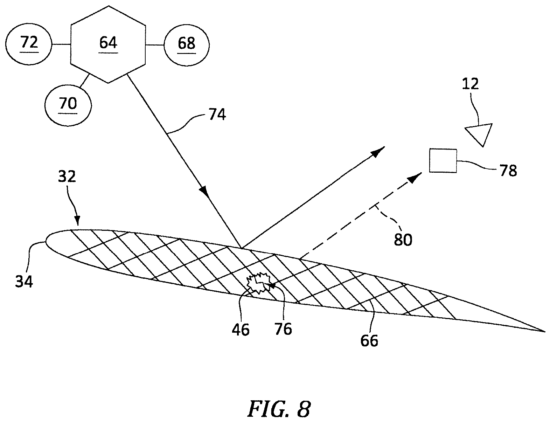

Referring also to Fig. 8, showing a top view of an exemplary fan blade 34 with a projection of a mesh light pattern employed for damage detection. A laser illuminator 64 projects laser lines and/or a laser mesh pattern 66 (such as a grid of line segments or a rectangular mesh) onto the fan blade surface 32. The laser illuminator 64 can employ either a combination of optical lens and light interference devices 68 (e.g., double slit or holes), or a fan of laser lines produced, for example, by an array of cylindrical lenses 70 or a combination of one or more Powell lenses 72. In an exemplary embodiment, one can employ multiple arrays of cylindrical lenses to produce thin and well defined laser lines 66 to be projected onto the fan blade 34. Note by rotating one of the array of cylindrical lenses 90 degrees relative to the other one, a rectangular mesh 66 can be obtained as well. A Powell lens produces uniform thin straight lines from a cylindrical (Gaussian) laser beam and a combination can generate a mesh light pattern 66. The Powell lens can be employed to split the laser beam while tailoring the angle of line fan, as well as the intensity and line width. The Powell lens can produce thin and well defined laser lines to be projected onto the fan blade 34. In an exemplary embodiment, a 3 mil laser line thickness is readily achievable.

Note that additional lenses may be required to focus or collimate and direct the light beams 74. Such an optical technique will result in a mesh or a series of lines 66, projected onto the fan blade surface 32 and pictures can then be taken with a high-speed camera as the sensor 12.

The fan blade surface 32 can be curved and twisted, so, the straight lines falling onto the surface 32 will become curved lines 66. This effect can be used to measure the surface geometry (3D scanning) and can be used to detect deviations and manufacturing defects. When a defect 46 is passed over by one of these lines 66, the defect 46 will exhibit a kink or discontinuity 76 on an otherwise smooth line 66.

In order to detect the surface damage 46, The kinks 76 are detected on these laser lines 66 projected on the fan blade surface 32. The thickness of the laser line 66 can be thin enough to resolve small defects 46. For example, a 3 mils defect 46 would require a laser line 66 thickness of about 3 mils or less. The laser line 66 illuminates the surface 32 at the locations the laser line 66 falls on the surface 32. However in the locations on the surface 32 that the laser line 66 does not fall, the surface will appear to be dark. Thus, the problem with specular reflection when normal illumination is used does not exist here.

Various combinations of the Powell lens 72 geometry, the optical materials the lens is made of, the primary laser frequency, beam thickness and intensity can all be used to produce the desirable characteristics of the laser lines 66. This technique relies on detecting kinks 76 on these laser lines 66 when the light beams 74 fall on a surface defect 46.

Detection of such a kink 76 would significantly simplify the downstream image analytics. An elaborate deep neural network classification system is not needed. Nor does it require a large number of labelled training data set. Kinks, or discontinuities 76 are detected on the laser lines 66. This allows many types of unsupervised algorithms to be utilized.

For example, looking for abrupt changes in the curvature of the curves of the laser line 66 can be accomplished using image segmentation methods or various autoencoder architecture which may or may not utilize neural networks. Polarizers 78 can also be employed to increase the contrast of the laser light reflected 80 from the surface defect 46 making such detection even easier.

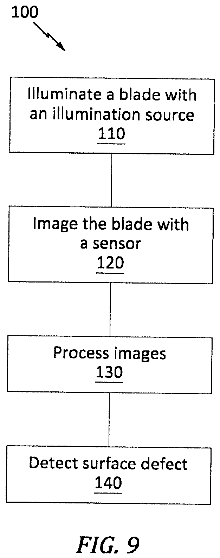

Referring also to Fig. 9, a process map is shown. The process for in-situ inspection of a gas turbine engine fan 100 includes a step 110 of illuminating a blade with an illumination source. At step 120, the process includes imaging the blade with a sensor. At 130 the image is processed. At 140 a surface defect is detected.

A technical advantage of the disclosed optical inspection system can include high speed cameras can be deployed and imbedded in an engine to record the surface conditions of the fan blades.

Another technical advantage of the disclosed optical inspection system can include using light polarization to detect surface damage on a fan blade to alleviate the difficulties associated with a high speed camera based system.

Another technical advantage of the disclosed optical inspection system can include a method to capitalize on the difference in the polarization of light reflected off a damaged site from its undamaged surrounding area.

Another technical advantage of the disclosed optical inspection system can include a process that effectively amplifies the contrast between the damaged areas with its undamaged surroundings and thus, making the image analytics component of the system simple and efficient simply by seeking isolated high contrast objects.

Another technical advantage of the disclosed optical inspection system can include high intensity, coherent, and collimated laser lines which reduce/eliminate the effects of varying surface reflectance on the fan blades as only where the laser lines fall on the surface is illuminated.

Another technical advantage of the disclosed optical inspection system can include a reduction in the power requirement of illumination.

Another technical advantage of the disclosed optical inspection system can include simplification of the image analytics which will result in a simpler and more reliable in-situ fan blade damage detection system.

Another technical advantage of the disclosed optical inspection system can include a reduction of the requirement on the computational power compared with a supervised deep neural network classification system operating on normal pictures as one needs only to detect kinks on otherwise smooth curves.

Another technical advantage of the disclosed optical inspection system can include a simpler, less computationally demanding algorithm is required.

Another technical advantage of the disclosed optical inspection system can include no need for an elaborate training set to learn how to find local deviation from a smooth curve as many simple autoencoder, image segmentation methods, or statistical methods would be sufficient.

There has been provided an optical inspection system. While the optical inspection system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An in-situ system for a gas turbine engine blade inspection comprising:
a sensor system configured to capture images of a forward surface of at least one gas turbine engine blade;
a processor coupled to the sensor system, the processor configured to determine damage to the at least one gas turbine engine blade based on image analytics;
an illumination source in operative communication with the forward surface of at least one gas turbine engine blade; and
a tangible, non-transitory memory configured to communicate with the processor, the tangible, non-transitory memory having instructions stored therein that, in response to execution by the processor, cause the processor to perform operations comprising:
receiving, by the processor, data for the forward surface of at least one gas turbine engine blade from the sensor system; and
determining, by the processor, surface damage responsive to the light source.

2. The in-situ system for gas turbine engine blade inspection of claim 1, further comprising:
a polarization filter in operative communication with the sensor system.

3. The in-situ system for gas turbine engine blade inspection of claim 1 or 2, wherein the sensor system comprises at least one of a CMOS sensor and a polarization camera.

4. The in-situ system for gas turbine engine blade inspection of one of claims 1-3, wherein the illumination source is configured to emit linearly polarized light, the linearly polarized light being turned into an elliptically polarized light responsive to reflection off of the surface damage.

5. The in-situ system for gas turbine engine blade inspection of one of claims 1-4, further comprising:
at least one of a combination of optical lens and light interference devices operatively coupled to the illumination source,
laser lines produced by an array of cylindrical lenses or a combination of one or more Powell lenses operatively coupled to the illumination source,
optionally wherein the illumination source is configured to produce a mesh or a series of lines projected onto the forward surface of the at least one gas turbine engine blade,
particularly wherein the illumination source creates a kink or discontinuity on a smooth curve of the mesh or lines responsive to illumination of the surface damage.

6. The in-situ system for gas turbine engine blade inspection of one of claims 1-5, wherein said gas turbine engine blade is selected from the group consisting of a fan blade a vane, a compressor blade, a compressor vane, a turbine blade, and a turbine vane.

7. A method for in-situ inspection of a gas turbine engine fan, comprising:
positioning a sensor to capture images of a surface of at least one gas turbine engine fan blade;
positioning an illumination source in operative communication with the surface of at least one gas turbine engine blade;
coupling a processor to the sensor, the processor configured to determine damage to the at least one gas turbine engine fan blade based on image analytics; wherein the processor performs operations comprising:
receiving, by the processor, imaging data for the forward surface of at least one gas turbine engine fan blade from the sensor system; and
determining, by the processor, surface damage responsive to the light source.

8. The in-situ system of one of claims 1-6 or method for in-situ inspection of a gas turbine engine fan of claim 7, wherein the illumination source is selected from the group consisting of a polarized light, an infrared light and a laser mesh pattern of light.

9. The method for in-situ inspection of a gas turbine engine fan of claim 7 or 8, further comprising:
operatively coupling a polarization filter with the sensor system.

10. The in-situ system of one of claims 1-6 or method for in-situ inspection of a gas turbine engine fan of one of claims 7-9, further comprising:
disabling an IR cut-off filter from a CMOS sensor.

11. The method for in-situ inspection of a gas turbine engine fan of one of claims 7-10, further comprising:
configuring the light source to emit linearly polarized light; and
turning the linearly polarized light into an elliptically polarized light responsive to reflection off of the surface damage.

12. The method for in-situ inspection of a gas turbine engine fan of one of claims 7-11, further comprising:
operatively coupling the illumination source to at least one of a combination of optical lens and light interference devices, and
laser lines produced by an array of cylindrical lenses or a combination of one or more Powell lenses.

13. The method for in-situ inspection of a gas turbine engine fan of one of claims 7-12, further comprising:
configuring the illumination source to produce a mesh or a series of lines projected onto the forward surface of the at least one gas turbine engine blade,
optionally further comprising:
creating a kink or discontinuity on a smooth curve of the mesh or lines with the illumination source responsive to illumination of the surface damage.

14. The method for in-situ inspection of a gas turbine engine fan of one of claims 7-13, wherein capturing images are created during gas turbine engine operational conditions selected from the group consisting of coasting, spool-up, and spool-down, including at least one complete revolution.

15. The method for in-situ inspection of a gas turbine engine fan of one of claims 7-14, wherein said sensor comprises at least one of, multiple sensors, a video camera, a high-speed camera, a CMOS sensor and a polarization camera.
